(19)

Europäisches Patentamt
European Patent Office
Office européen des brevets

(11) **EP 3 174 001 A1**

(12) **EUROPEAN PATENT APPLICATION**

(43) Date of publication:
**31.05.2017 Bulletin 2017/22**

(51) Int Cl.:
***G06Q 30/06*** *(2012.01)*

(21) Application number: **16199512.1**

(22) Date of filing: **18.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.11.2015 JP 2015231436**
**13.10.2016 JP 2016201415**

(71) Applicant: **FUJITSU LIMITED**
**Kawasaki-shi Kanagawa 211-8588 (JP)**

(72) Inventors:
- **Yu, Shanshan**
  **Kanagawa, 211-8588 (JP)**
- **Nakashima, Satoshi**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **GAZE TRACKING SYSTEM AND GAZE TRACKING METHOD**

(57)     A storage device (30, 30a, 30b) stores association information (31, 31a, 31b(1), 31b(2)), which represents a relationship between a combination of items that are purchased by a customer and an item that the customer gazes at before purchasing the combination of items. A detection unit (41, 41a) uses an image picked up by an image pickup device for picking up an image of a customer so as to detect a line-of-sight position of a customer in an area in which information of a plurality of items is presented. Next, a determination unit (42, 42a, 42b) determines one item from among items that are purchased by a first customer on the basis of purchase information of the first customer and the association information stored in the storage device. Then, a calibration unit (43, 43a) calibrates the detected line-of-sight position of the first customer in the area on the basis of a position in the area at which information of the determined one item is presented.

FIG. 1

**Description**

FIELD

The embodiments discussed herein are related to a gaze tracking system and a gaze tracking method.

BACKGROUND

Places of business such as supermarkets, restaurants, etc. for example use point of sale system (POS) register device etc. so as to obtain for example the names, prices, etc. of purchased items as purchase information related to the purchased items. Also, a place of business uses the obtained purchase information to determine for example the amount of stocking, the prices, ways of displaying, etc. of items.

Also, a technique is proposed that utilizes data, determined by using an image obtained by picking up an image of a customer, of what item the customer gazed at and data of an item that the customer purchased so as to perform accurate marketing (see Patent Documents 1 and 2 for example). A line-of-sight measurement system that implements simplified calibration is also known (see Non Patent Documents 1 and 2 for example).

Patent Document 1: Japanese Laid-open Patent Publication No. 2009-151409

Patent Document 2: Japanese Laid-open Patent Publication No. 2010-204882

Non Patent Document 1: Ohno et al., "Just Look at Two Points: A Gaze Tracking System with Easy Calibration", Information Processing Society of Japan, Vol. 44, No 4, pp.1136-1149, 2003

Non Patent Document 2: Ohno et al., "FreeGaze: A Gaze Tracking System for Everyday Gaze Interaction", ETRA 2002, pp. 125-132, 2002

It is an object in one aspect of the invention to improve accuracy of detection of the line of sight of a customer without obtaining correction data of each customer in advance.

In one aspect, a gaze tracking system includes a storage device and a detection device. The detection device includes a detection unit, a determination unit and a calibration unit. The storage device stores association information, which represents a relationship between a combination of items that are purchased by a customer and an item that the customer gazes at before purchasing the combination of items. The detection unit uses an image picked up by an image pickup device for picking up an image of a customer so as to detect a line-of-sight position of a customer in an area in which information of a plurality of items is presented. Next, the determination unit determines one item from among items that are purchased by a first customer on the basis of purchase information of the first customer, which represents an item purchased by a customer, and the association information stored in the storage device. Then, the calibration unit calibrates the detected line-of-sight position of the first customer in the area on the basis of a position in the area at which information of the determined one item is presented.

BRIEF DESCRIPTION OF DRAWINGS

FIG. 1 illustrates an embodiment of a gaze tracking system and a gaze tracking method.
FIG. 2 illustrates another embodiment of the gaze tracking system.
FIG. 3 illustrates an example of a relationship between movements of the line of sight of a customer and the position of an item.
FIG. 4 illustrates an example of the gaze table illustrated in FIG. 2.
FIG. 5 illustrates an example of a gaze tracking process in the gaze tracking system illustrated in FIG. 2.
FIG. 6 illustrates yet another embodiment of the gaze tracking system.
FIG. 7A and FIG. 7B illustrate examples of the gaze tables illustrated in FIG. 6.
FIG. 8 illustrates an example of a gaze tracking process in the gaze tracking system illustrated in FIG. 6.
FIG. 9 illustrates an example of a hardware configuration of gaze tracking systems illustrated in FIG. 1, FIG. 2 and FIG. 6.

## DESCRIPTION OF EMBODIMENTS

Hereinafter, explanations will be given for the embodiments by referring to the drawings.

Because customers have eye balls with different radii etc. , the lines of sight of respective customers detected from images involve influence of the individual difference of each customer even when the lines of sight are detected under similar conditions. This may lead to a situation where mistakes are made in determination of the association between an item that a customer actually gazed at and a purchased item in a case when lines of sight are detected without taking customers' individual differences into consideration and when purchased items were arranged adjacently to each other.

In view of this, a method for a gaze tracking process is known in which a subject person is instructed to gaze at a plurality of points that are specified in advance, correction data representing the subject person's individual difference such as the eyeball radius etc. is obtained and the influence of the individual difference is corrected by using the correction data. However, in a case where this method is applied to the gaze tracking of customers performed while the customers select items in a place of business, it is difficult to obtain correction data of all the customers in advance because many and unspecified customers visit the place of business.

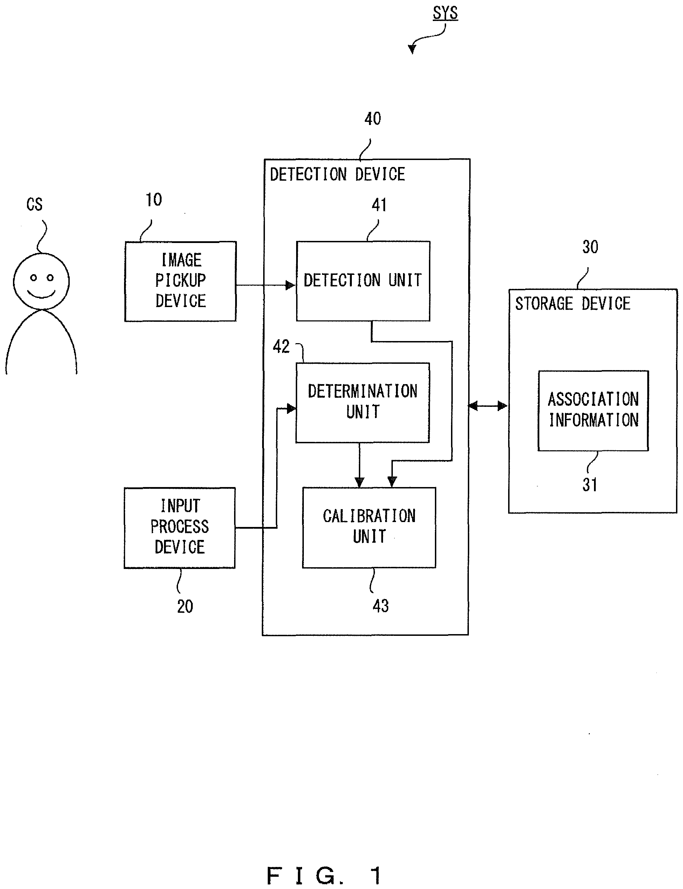

FIG. 1 illustrates an embodiment of a gaze tracking system and a gaze tracking method. Note that the configurations or the operations of gaze tracking system SYS are not limited to the example illustrated in FIG. 1, and for example any of the process units in a detection device 40 may be provided in a separate computer that is connected communicably.

Gaze tracking system SYS illustrated in FIG. 1 includes an image pickup device 10, an input process device 20, a storage device 30 and a detection device 40. The detection device 40 is wiredly or wirelessly connected to the image pickup device 10, the input process device 20 and the storage device 30. Note that the detection device 40 maybe connected to the image pickup device 10, the input process device 20 and the storage device 30 via a network.

The image pickup device 10 is for example a digital camera, and includes a lens and an image pickup element such as a Charge-Coupled Device (CCD), a Complementary Metal-Oxide Semiconductor (CMOS), or the like. The image pickup device 10 is provided to a place of business so as to pick up images of visiting customer CS at a prescribed frame rate such as thirty frames per second etc. The image pickup device 10 outputs the picked up images to the detection device 40. Note that a plurality of image pickup devices 10 may be provided to a place of business. Also, while the image pickup device 10 may be arranged in any location in a place of business, it is desirable that the image pickup device 10 be arranged at a position from which images of the faces of customers CS can be picked up.

The input process device 20 is a computer such as a POS register device, a tablet terminal, etc., and is provided to a place of business. The input process device 20, through input manipulation by an employee etc. of the place of business, performs an accounting process or an order receiving process for an item that customer CS is purchasing. The input process device 20 obtains information (which will also be referred to as purchase information hereinafter) representing an item that customer CS purchased or ordered through the accounting process or the order receiving process. The input process device 20 outputs the obtained purchase information to the detection device 40.

The storage device 30 is a hard disk etc., and stores association information 31, which represents the relationship between a combination of items that customer CS purchases and an item that customer CS gazes at. The association information 31 is generated in advance on the basis of for example a questionnaire survey conducted on customer CS etc., and is stored in the storage device 30. For example, an employee of the place of business conducts in advance a questionnaire survey on a plurality of customers CS about whether each of the purchased items was purchased after the customer CS gazed at (carefully observed) it or was purchased without the customer CS doing so. Then, on the basis of the result of the questionnaire survey, a probability is calculated for what item customer CS mainly gazes at in relation to a combination of purchased items. For example, the detection device 40 obtains, through manipulation by an employee etc. on the input process device 20 etc., the value of a probability etc. for each item that customer CS gazes at in relation to combination of items that are purchased. The detection device 40 generates the association information 31 including the received item combination, item that customer CS gazes at and a probability so as to store the generated association information 31 in the storage device 30.

Note that the association information 31 may include for example the center position etc. of an item in an image picked up by the image pickup device 10 as information representing the position of the item that customer CS gazes at. Also, the association information 31 may be generated by a computer apparatus etc. that is not the detection device 40.

Note that the storage device 30 may be arranged in the place of business or, when the place of business is a franchisee etc., may be arranged in the building of the head office of the franchiser. Also, the storage device 30 may be implemented by a storage unit such as a hard disk, a memory, etc. in the detection device 40. In other words, the storage device 30 may be implemented in an arbitrary form as long as information stored in the storage device 30 can be referred to when the detection device 40 performs processes.

The detection device 40 is a computer apparatus etc. The detection device 40 includes a detection unit 41, a determination unit 42 and a calibration unit 43. For example a processor etc. included in a computer apparatus executes a gaze tracking program stored in a storage unit such as a memory etc. included in the computer apparatus so as to operate as the detection unit 41, the determination unit 42 and the calibration unit 43. Alternatively, the detection unit 41, the determination unit 42 and the calibration unit 43 may be implemented by a circuit that is arranged in the detection device 40.

The detection unit 41 performs a detection process such as a corneal reflection method etc. in which each of the images picked up by the image pickup device 10 at a prescribed frame rate is used so as to detect a line of sight, and thereby detects the line-of-sight position of customer CS.

It is desirable that when the detection unit 41 employs a corneal reflection method, a camera capable of detecting infrared rays be used as the image pickup device 10 and the light source emitting the light of infrared rays be arranged in or adjacent to the image pickup device 10. In such a case, the detection unit 41 for example calculates the distribution of luminance values in an image picked up by the image pickup device 10 so as to detect, as the pupil of customer CS, a circular area having a luminance value lower than those in the surrounding areas. Also, on the basis of the calculated distribution of luminance values, the detection unit 41 detects, from the image, a dotlike area having a luminance value higher than those of the surrounding areas, the dotlike area being detected as a bright point indicating the location at which the infrared ray emitted from the light source is reflected by the cornea of an eye of customer CS. Then, the detection unit 41 detects the line of sight of customer CS on the basis of for example the distance between the detected center position of the pupil of customer CS and the position of the bright point and on the basis of a curvature radius of the cornea that is set in advance.

The determination unit 42 uses the association information 31 read from the storage device 30 and purchase information received from the input process device 20 so as to determine, from among the purchased items, an item that customer CS is believed to have gazed at for selecting items before the purchasing the items. The determination unit 42 uses purchase information received from the input process device 20 so as to obtain information representing a combination of items purchased by customer CS. Then, the determination unit 42 for example refers to the association information 31 so as to determine an item set to have the highest probability of having customer CS gaze at it in the combination of items, as an item that customer CS was gazing at in selecting items before purchasing them. As described above, by using purchase information and the association information 31, the determination unit 42 can determine an item that customer CS is believed to have been gazing at.

On the basis of the position of the item determined by the determination unit 42, the calibration unit 43 calibrates the line of sight of customer CS detected by the detection unit 41. It is assumed for example that the calibration unit 43 treats the position of the item determined by the determination unit 42 as a prescribed location (which will also be referred to as "gaze point in the real space" hereinafter) for correcting the influence of the individual difference of customer CS such as the eyeball radius etc. Then, the calibration unit 43 uses an image in which customer CS is gazing at the item determined by the determination unit 42 so as to calculate correction data representing the individual difference of customer CS in such a manner that the line of sight of customer CS detected by the detection unit 41 coincides with the gaze point in the real space. The calibration unit 43 uses the calculated correction data so as to calibrate the line of sight of customer CS detected from each image by the detection unit 41.

In the embodiment illustrated in FIG. 1, the association information 31 is stored in the storage device 30 in advance. Thereby, by using purchase information and the association information 31, the detection device 40 can determine an item that customer CS is believed to have been gazing at in selecting items before purchasing them. Then, the detection device 40 calibrates the line of sight of customer CS in such a manner that the gaze point in the real space of customer CS is associated with the position of the determined item when the detected line of sight of customer CS indicates a spot around the determined item. Thereby, gaze tracking systems SYS can calibrate the line of sight of customer CS without obtaining the correction data of each customer CS in advance, and can improve the detection accuracy of the line of sight of customer CS. This makes it possible to identify, more precisely than in the conventional techniques, an item that customer CS was gazing at in selecting items. It is made possible to determine whether or not items that customer CS did not purchase received gaze from the customer CS, allowing processes of marketing to be performed with higher accuracy than in the conventional techniques.

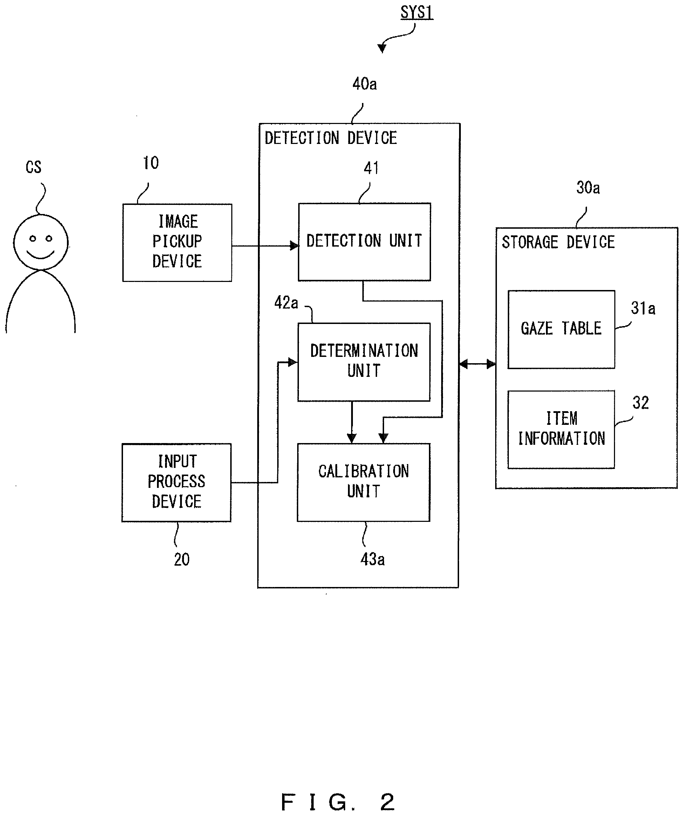

FIG. 2 illustrates another embodiment of the gaze tracking system. Elements having functions the same as or similar to those explained in FIG. 1 are denoted by the same or similar symbols and detailed explanations thereof will be omitted.

Gaze tracking system SYS1 illustrated in FIG. 2 includes the image pickup device 10, the input process device 20, a storage device 30a and a detection device 40a. The detection device 40a is wiredly or wirelessly connected to the image pickup device 10, the input process device 20 and the storage device 30a. Note that the detection device 40a may be connected to the image pickup device 10, the input process device 20 and the storage device 30a via a network.

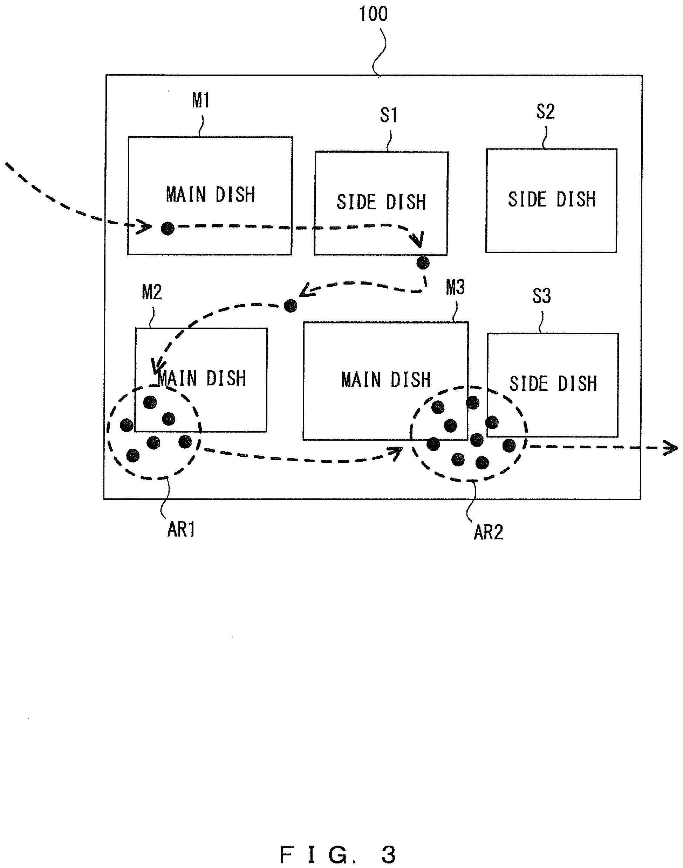

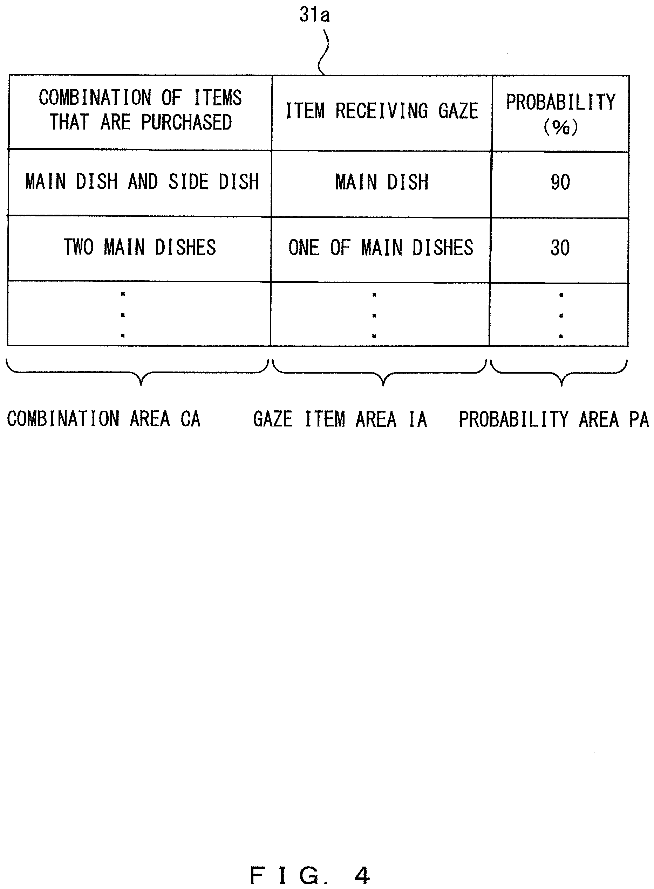

The storage device 30a is a hard disk etc., and stores a gaze table 31a and item information 32. The gaze table 31a contains data representing a relationship between a combination of items that are purchased by customer CS and an item that customer CS gazes at before purchasing the combination of the items. The gaze table 31a is an example of association information. The gaze table 31a will be explained in FIG. 3 and FIG. 4.

The item information 32 is data including the names, sizes, positions, etc. of items sold in the place of business. Note that, in a case when the place of business is a restraint, the sizes and positions of items included in the item information 32 are the sizes of images in the menu and the center positions of the images for the respective dishes that are provided. Also, in a case when the place of business is a supermarket etc. , the size and position of an item in the item information 32 are the size and the center position of an item in an image, picked up by the image pickup device 10, including the item displayed in the place of business.

The detection device 40a is a computer apparatus etc. The detection device 40a includes the detection unit 41, a determination unit 42a and a calibration unit 43a.

Note that the detection unit 41 may detect the size, the center position, etc. of an item displayed on a shelf, together with the line of sight of customer CS from for example an image picked up by one through a plurality of image pickup devices 10. Then, the detection device 40a may output the detected size and center position of an item to the storage device 30a so as to update the item information 32 in the storage device 30a.

The determination unit 42a uses the gaze table 31a read from the storage device 30a and purchase information received from the input process device 20 so as to determine an item that customer CS gazed at in selecting items before purchasing them. The operation of the determination unit 42a will be explained in FIG. 3 and FIG. 4.

On the basis of the position of the item determined by the determination unit 42a, the calibration unit 43a calibrates the line of sight of customer CS detected by the detection unit 41. The operation of the calibration unit 43a will be explained in FIG. 3 and FIG. 4.

Note that the configurations or the operations of gaze tracking systems SYS1 are not limited to the example illustrated in FIG. 2. For example, when the image pickup device 10 has a function of detecting the line of sight of customer CS as a gaze tracking sensor equivalent to the detection unit 41, the detection unit 41 may be omitted from the detection device 40a. In such a case, the detection device 40a is implemented in a form that the detection device 40a includes a detection unit that is treated as being part of the image pickup device 10.

FIG. 3 illustrates an example of a relationship between movements of the line of sight of customer CS and the position of an item. On the menu 100 illustrated in FIG. 3, images of main dishes M (M1 through M3) such as a meat dish, a fish dish, etc. and images of side dishes S (S1 through S3) such as coffee, a salad, etc. are arranged. Note that FIG. 3 illustrates a case where for example main dishes M1 and M3 are recommended dishes so that the images of main dishes M1 and M3 have sizes greater than those of main dish M2 and side dishes S1 through S3.

Note that FIG. 3 indicates the positions (which will also be referred to as detection locations) of the line of sight of customer CS detected from an image by the detection unit 41 before a calibration process is performed by the calibration unit 43a by the black points, and also illustrates the movement of the line of sight of customer CS by the dashed arrows. Also, areas AR1 and AR2 illustrated in FIG. 3 represent areas in which the line of sight of customer CS stays and at which customer CS is gazing (in other words, areas in which detection locations concentrate).

For example, as illustrated in FIG. 3, the line of sight of customer CS in area AR2 distributes over the images of main dish M3 and side dish S3. Also, because the line of sight of customer CS in area AR2 is one before a calibration process is performed by the calibration unit 43a, it is difficult to determine whether the customer CS was gazing at main dish M3 or side dish S3 from the line of sight of customer CS detected in area AR2. Accordingly, gaze tracking system sys1 in advance generates the gaze table 31a for determining an item that customer CS is gazing at, on the basis of the result of a questionnaire survey etc. conducted on customer CS by an employee etc. of the place of business. For example, an employee etc. of the place of business conducts a questionnaire survey on customer CS about whether or not customer CS gazed at (carefully observed) the images on the menu 100 before ordering each dish. Then, on the basis of the result of the questionnaire survey and in accordance with a combination of purchased items (ordered dishes), gaze tracking systems SYS1 calculates a probability for each item in accordance with the combination for which item (dish) customer CS is gazing at. Note that the process of calculating probabilities may be performed by a separate computer so that the execution result is stored in the storage device 30a.

When for example ninety customers out of one hundred customers who ordered the combination of main dish M3 and side dish S3 answered the questionnaire stating that they gazed at main dish M3, calculations are performed such as that the probability that customers CS will gaze at the image of main dish M3 before ordering it is ninety percent. Also, because for example there is a tendency for customers CS to gaze at the images of both of main dishes M before ordering them in cases when customer CS orders two main dishes M, both of main dishes M are each calculated to have an approximately equal probability of being ordered. For example, when thirty customers out of one hundred customers who ordered combinations of two kinds of main dishes M answered the questionnaire stating that gazed at one of two main dishes M, calculations are performed such as that the probability that customers CS will gaze at the image of one of the main dishes M is thirty percent. The detection device 40a obtains the probability for each item calculated in accordance with a combination of items that are purchased or dishes that are ordered, through a manipulation by an employee etc. of a keyboard etc. included in the input process device 20 or the detection device 40a. Then, the detection device 40a generates the gaze table 31a containing a combination of the obtained items, an item that a customer gazes at, and a probability, and stores the generated gaze table 31a in the storage device 30a.

FIG. 4 illustrates an example of the gaze table 31a illustrated in FIG. 2. An area for storing the gaze table 31a has an area allocated for information that represents a combination of items that are purchased, an item that a customer gazes at, and a probability. An area for a combination of items that are purchased (which will also be referred to as combination area CA) stores information representing a combination of purchased items or ordered dishes such as "main dish and side dish", "two main dishes", etc. An area for an item that a customer gazes at (which will also be referred to as gaze item area IA) stores information representing an item that customer CS gazes at such as "main dish", "one of main dishes", etc., in accordance with a combination of items that are purchased. An area for a probability (which will also be referred to as probability area PA) stores the probability that customer CS will gaze at an item stored in gaze item area IA (ninety percent, thirty percent, etc. in the example illustrated in FIG. 4). Values stored in probability area PA are calculated on the basis of results of questionnaire surveys etc. as explained in FIG. 3.

Note that the gaze table 31a in a place of business such as a supermarket etc. is also generated similarly to that of a restaurant.

Note that the detection device 40a may estimate an item that customer CS gazed at in selecting items, on the basis of for example the direction of the face of each customer CS in a picked-up image and the purchase information of each customer CS so as to generate the gaze table 31a on the basis of the estimation result. In such a case, the detection device 40a performs for example an image process of extracting edges etc. from a picked-up image so as to detect the direction of the face of customer CS from the distribution of the extracted edges.

Note that the probability for each item that customer CS will gaze at it in accordance with a combination of items that are purchased may be set in accordance with the item, the position at which the item is arranged, the size, the price, etc.

The determination unit 42a obtains information of a combination of items purchased by customer CS on the basis of for example the purchase information received from the input process device 20. The determination unit 42a determines, as an item that customer CS was gazing during the purchase, an item stored in an area for an item that a customer CS gazes at in the gaze table 31a corresponding to the obtained combination. For example, when the customer CS viewed the menu 100 illustrated in FIG. 3 and ordered main dish M3 and side dish S3, the determination unit 42a determines main dish M3 to be an item that customer CS was gazing at, on the basis of the purchase information and the gaze table 31a.

Note that the determination unit 42a uses a probability stored in probability area PA so as to determine whether or not to determine an item stored in gaze item area IA in the gaze table 31a in a combination of items purchased by customer CS to be an item that the customer CS gazed at in selecting items. For example, when the probability of an item stored in gaze item area IA in a combination of items purchased by customer CS is equal to or lower than a prescribed value, the probability that the customer CS was also gazing at an item other than the item stored in gaze item area IA is considered. For example, the prescribed value is assumed to be fifty percent. As illustrated in FIG. 4, when customer CS ordered two main dishes M, the probability is considered that the customer CS was gazing at both of the main dishes M that he or she ordered because "30" percent as the probability stored in probability area PA is equal to or lower than the prescribed value.

In such a case, when the probability in probability area PA is equal to or lower than the prescribed value, it is determined that determination of an item that customer CS was gazing at upon the purchase is difficult. Also, the detection device 40a does not perform a calibrating process on the detected line of sight of the customer CS when the determination is determined to be difficult by the determination unit 42a. Gaze tracking system SYS1 uses data of the lines of sight of customers CS from which the lines of sight of customers CS not having received a calibration process have been removed (i.e., the lines of sight of customers CS that received the calibration process) so as to conduct marketing, and thereby can improve the accuracy of the marketing.

The calibration unit 43a reads item information 32 from the storage device 30a so as to obtain the position of an item determined by the determination unit 42a on the basis of the read item information 32, i.e., the position of the gaze point in the real space. For example, when customer CS viewed the menu 100 illustrated in FIG. 3 and thereafter ordered main dish M3 and side dish S3, the calibration unit 43a obtains the center position of the image of the main dish M3 as the position of the gaze point in the real space. The calibration unit 43a uses an image in which customer CS is gazing at an item determined by the calibration unit 43a, and calculates correction data, which represents an individual difference of the customer CS, in such a manner that the line of sight of the customer CS detected by the detection unit 41 (i.e., the detection location in area AR2 in FIG. 3) coincides with the gaze point in the real space. The calibration unit 43a uses the calculated correction data so as to calibrate the line of sight of customer CS detected from each image by the detection unit 41.

As a matter of course, there can be a case, as illustrated in FIG. 3, where one item (image of main dish M2 in the example of FIG. 3) is arranged in an area in which a plurality of lines of sight of customers CS concentrate. For the line of sight detected for customer CS who ordered the combination of main dish M3 and side dish S3 for example, the calibration unit 43a may treat also the position of the image of an item not purchased, i.e., main dish M2, as the gaze point in the real space when the data illustrated in FIG. 3 is obtained. Thereby, the calibration unit 43a can use the two positions of main dishes M3 and M2 as the gaze points in the real space so as to calibrate the line of sight of customer CS more accurately than in a case when calibration is performed at one gaze point in the real space. Also, even in a case when determination of a gaze point in the real space is determined to be difficult by the determination unit 42a, the calibration unit 43a can calibrate the line of sight of customer CS by treating the position of main dish M2 as the gaze point in the real space.

Note that the determination unit 42a does not have to perform the above processes each time customer CS purchases an item, and the calibration unit 43a does not have to perform the above processes each time customer CS purchases an item. For example, the detection device 40a may hold data containing the line of sight of customer CS detected by the detection unit 41 and purchase information for each customer CS obtained from the input process device 20 in a storage unit such as a hard disk device etc. in the detection device 40a or in the storage device 30a. Also, when gaze tracking systems SYS1 receives a prescribed execution instruction, the determination unit 42a may read purchase information for each customer CS held in the storage device 30a etc. so as to determine an item serving as the gaze point in the real space for each customer CS. Also, the calibration unit 43a may read data containing the line of sight for each customer CS held in the storage device 30a etc. so as to calibrate the line of sight for each customer CS.

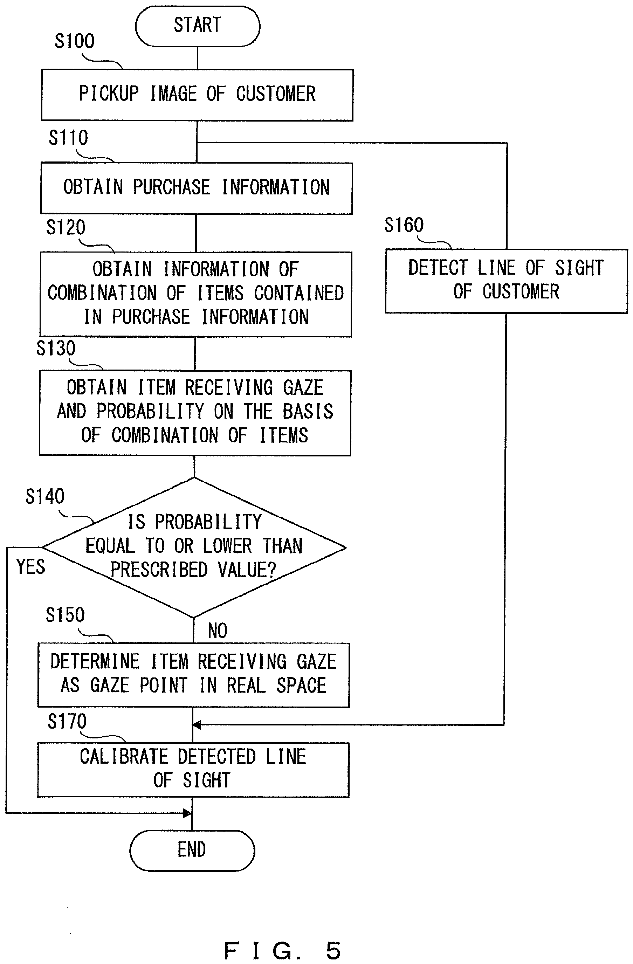

FIG. 5 illustrates an example of a gaze tracking process in gaze tracking systems SYS1 illustrated in FIG. 2. The operations from step S110 through step S170 illustrated in FIG. 5 are implemented by a control unit such as a processor etc. included in the detection device 40a executing a gaze tracking program. In other words, FIG. 5 illustrates another embodiment of a gaze tracking method. Note that the process illustrated in FIG. 5 may be implemented by hardware included in detection device 40a. In such a case, the detection unit 41, the determination unit 42a and the calibration unit 43a illustrated in FIG. 2 are implemented by a circuit arranged in the detection device 40a.

In step S100, the image pickup device 10 picks up images of visiting customer CS at a prescribed frame rate. The image pickup device 10 outputs the picked up images to the detection device 40a. Gaze tracking system SYS1 performs the processes from step S110 through step S150 and the process in step S160 in parallel. In other words, gaze tracking systems SYS1, after performing the process in step S100, performs the processes in step S110 and step S160. Note that the processes from step S110 through step S150 and the process in step S160 do not have to be performed in parallel, and either one of them may be performed ahead of the other.

In step S110, the input process device 20 obtains purchase information representing an item purchased by customer CS through a manipulation by an employee etc. of the place of business. Then, the input process device 20 outputs the obtained purchase information to the detection device 40a.

Next, in step S120, the determination unit 42a obtains, from the input process device 20, purchase information of customer CS that was obtained in step S110, and obtains information of a combination of items contained in the obtained purchase information.

Next, in step S130, the determination unit 42a refers to the gaze table 31a stored in the storage device 30a so as to obtain an item that customer gazes at and the probability on the basis of the information of the combination of items obtained in step S120, the item being obtained from among items included in the combination of items obtained in step S120.

Next, in step S140, the determination unit 42a determines whether or not the probability obtained in step S130 is equal to or lower than a prescribed value. When the probability obtained from the gaze table 31a is greater than the prescribed value, the operation of gaze tracking systems SYS1 proceeds to step S150. When the probability obtained from the gaze table 31a is equal to or lower than the prescribed value, gaze tracking systems SYS1 terminates the gaze tracking process, performing neither of the processes in step S150 and step S170, which are calibration processes for the line of sight of customer CS detected in step S160.

In step S150, the determination unit 42a determines, as the gaze point in the real space, an item stored in gaze item area IA in the gaze table 31a in the combination of items obtained in step S120.

In step S160, the detection unit 41 uses an image picked up in step S100 so as to perform a detection process such as a corneal reflection method etc.

In step S170, which is executed after the execution of the processes up to step S150 and the process in step S160, the calibration unit 43a calibrates the line of sight of customer CS detected in step S160 in reference to the position of the gaze point in the real space determined in step S150. Then, gaze tracking systems SYS1 terminates the gaze tracking process. Note that gaze tracking systems SYS1 may repeatedly execute the processes from step S100 through step S170 each time new customer CS visits the place of business.

After the execution of the gaze tracking process in FIG. 5, the calibration unit 43a uses correction data of the line of sight obtained by calibrating the line of sight in step S170 so as to calibrate the line of sight of customer CS detected from each image by the detection unit 41. For this, different calibration methods are used in accordance with the number of combinations of the gaze points in the real space determined in step S150 and the lines of sight of customer CS detected in step S160.

For example, when the number of the combinations of the gaze points and the lines of sight obtained by the gaze tracking process is two, the line of sight of customer CS can be calibrated by using the calibration method described in non Patent Documents 1 and 2. In such a case, a calibration process is performed in the following order.

(1) The calibration unit 43a uses the centroid positions of areas AR1 and AR2 so as to calculate line-of-sight vectors $v_{w\theta}$ of customer CS in the respective areas. Line-of-sight vectors $v_{w\theta}$ are homogeneous vectors in a polar coordinate system, and are described by the following equation, which uses coordinates 1, $\theta$, and $\phi$ of the polar coordinate system.

$$v_{w\theta} = \begin{pmatrix} l \\ \theta \\ \phi \\ 1 \end{pmatrix} \quad (1)$$

(2) The calibration unit 43a uses the center positions of the images of main dishes M2 and M3 so as to calculate line-of-sight vectors $v'_{w\theta}$ that is after the calibration for each of areas AR1 and AR2. Line-of-sight vectors $v'_{w\theta}$ are also described similarly to equation (1).
(3) The calibration unit 43a substitutes line-of-sight vectors $v_{w\theta}$ and line-of-sight vectors $v'_{w\theta}$, which are respectively for areas AR1 and AR2, into the following equations so as to generate simultaneous equations related to parameters w1 through w4 of a calibration matrix with four rows and four columns.

$$v'_{w\theta} = W v_{w\theta} \quad (2)$$

$$W = \begin{pmatrix} 1 & 0 & 0 & 0 \\ 0 & w1 & 0 & w2 \\ 0 & 0 & w3 & w4 \\ 0 & 0 & 0 & 1 \end{pmatrix} \quad (3)$$

Then, the calibration unit 43a calculates parameters w1 through w4 from the generated simultaneous equations. Calculated parameters w1 through w4 correspond to the correction data of the line of sight.
(4) The calibration unit 43a calibrates line-of-sight vectors $v_{w\theta}$, which represents the line of sight of customer CS detected from each image, by using equation (2), which uses calibration matrix W.

Note that the calibration unit 43a may use other positions representing areas AR1 and AR2 in place of the centroid positions of areas AR1 and AR2. Similarly, the calibration unit 43a may use, in place of the center positions of images of main dishes M2 and M3, other positions that represent these images.
When there are three or more combinations of gaze points and lines of sight, the calibration unit 43a may calculate parameters w1 through w4 that result in a minimum sum of squared error on the basis of equation (2).
Further, when there are four or more combinations of gaze points and lines of sight, the calibration unit 43a may perform mapping based on projective transformation on the relative coordinates of the center position of the pupil, with the position of the bright point of customer CS detected by the detection unit 41 as a reference position, and the coordinates of the gaze point in the real space. The position of the bright point represents the location at which reflection occurred in the cornea of an eye of the customer CS.
In such a case, N (N is an integer equal to or greater than four) relative coordinates (X1, Y1) through (XN, YN) and coordinates (x1, y1) through (xN, yN) of N gaze points are associated by the following equations (i=1 to N).

$$Xi = \frac{a1xi + a2yi + a3}{a7xi + a8yi + 1} \quad (11)$$

$$Yi = \frac{a4xi + a5yi + a6}{a7xi + a8yi + 1} \quad (12)$$

Equations (11) and (12) are rewritten as follows by using vectors g, which represent (X1, Y1) through (XN, YN), vector p, which represent parameters a1 through a8 of projective transformation, and matrix A with 2N rows and 8 columns.

$$g = Ap \quad (13)$$

$$g = \begin{pmatrix} X1 \\ Y1 \\ X2 \\ Y2 \\ \vdots \\ XN \\ YN \end{pmatrix}, A = \begin{pmatrix} x1 & y1 & 1 & 0 & 0 & 0 & -X1x1 & -X1y1 \\ 0 & 0 & 0 & x1 & y1 & 1 & -Y1x1 & -Y1y1 \\ x2 & y2 & 1 & 0 & 0 & 0 & -X2x2 & -X2y2 \\ 0 & 0 & 0 & x2 & y2 & 1 & -Y2x2 & -Y2y2 \\ \vdots & \vdots & \vdots & \vdots & \vdots & \vdots & \vdots & \vdots \\ xN & yN & 1 & 0 & 0 & 0 & -XNxN & -XNyN \\ 0 & 0 & 0 & xN & yN & 1 & -YNxN & -YNyN \end{pmatrix}, p = \begin{pmatrix} a1 \\ a2 \\ a3 \\ a4 \\ a5 \\ a6 \\ a7 \\ a8 \end{pmatrix}$$

$$(14)$$

When N = 4, matrix A is a matrix with eight rows and eight columns. Then, the calibration unit 43a calculates parameters a1 through a8 by the following equation, which uses inverse matrix $A^{-1}$ of matrix A.

$$p = A^{-1}g \quad (15)$$

When N > 4, the calibration unit 43a uses transposed matrix $A^{T}$ of matrix A so as to calculate the least squares solution of parameters a1 through a8 by the following equation.

$$p = (A^{T}A)^{-1}A^{T}g \quad (16)$$

Calculated parameters a1 through a8 correspond to correction data of the line of sight. Then, the calibration unit 43a uses parameters a1 through a8 so as to transform relative coordinates (Xi, Yi), which represent the line of sight of customer CS detected from each image, into coordinates (xi, yi) after calibration, and thereby calibrates the line of sight of customer CS.

In this example, because probability area PA stores the probability of gazing, the process proceeds to the process in step S150 when the probability is greater than the prescribed value in step S140, however the determination in step S140 may be changed in accordance with the meaning of a value stored in probability area PA. For example, when the probability that the customer did not gaze at is stored in probability area PA, the process may proceed to the process in step S150 when the probability is smaller than the prescribed value in the determination in step S140. It is sufficient for gaze tracking systems SYS1 to use the position information of an item that the customer was gazing at and thereby to calibrate the line of sight of customer CS when the probability of the customer CS having been gazing at the item in selecting that item is determined to be high.

In the embodiments illustrated in FIG. 2 through FIG. 5, the gaze table 31a is stored in the storage device 30a in advance. Thereby, the detection device 40a can determine an item that customer CS is believed to be gazing at in selecting items before the purchase, by using purchase information and the gaze table 31a. Then, the detection device 40a calibrates the line of sight of customer CS in such a manner that the gaze point in the real space of customer CS is associated with the position of the determined item when the detected line of sight of customer CS indicates a spot around the determined item. Thereby, gaze tracking systems SYS1 can calibrate the line of sight of customer CS without obtaining the correction data of each customer CS in advance, and can improve the detection accuracy of the line of sight of customer CS. This makes it possible to identify, more precisely than in the conventional techniques, an item that customer CS was gazing at in selecting items. It is made possible to determine whether or not items that customer CS did not purchase received gaze from the customer CS, allowing processes of marketing to be performed with higher accuracy than in the conventional techniques.

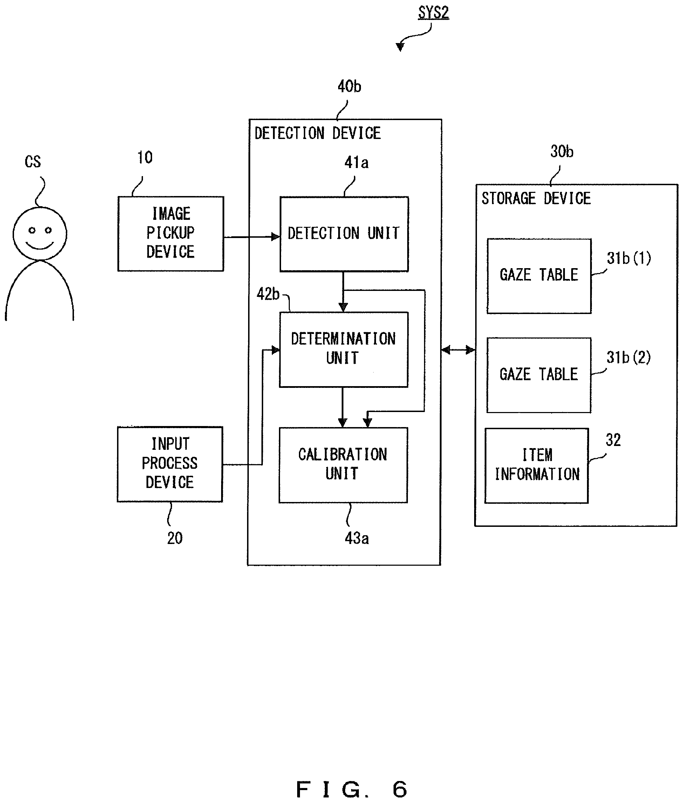

FIG. 6 illustrates yet another embodiment of a gaze tracking system. Elements having functions the same as or similar to those explained in FIG. 1 or FIG. 2 are denoted by the same or similar symbols and detailed explanations thereof will be omitted.

Gaze tracking system SYS2 illustrated in FIG. 6 includes the image pickup device 10, the input process device 20, a storage device 30b and a detection device 40b. The detection device 40b is wiredly or wirelessly connected to the image pickup device 10, the input process device 20 and the storage device 30b. Note that the detection device 40b may be connected to the image pickup device 10, the input process device 20 and the storage device 30b via a network.

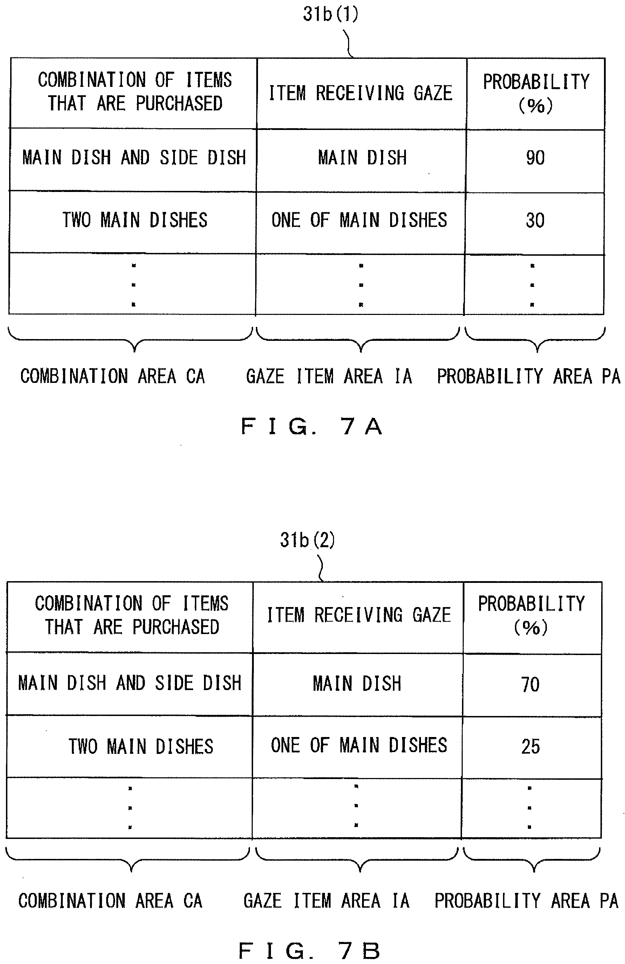

The storage device 30b is a hard disk etc., and stores gaze tables 31b (31b(1) and 31b(2)) and the item information 32. Similarly to the gaze table 31a illustrated in FIG. 2, each of the gaze tables 31b contains data representing a relationship between a combination of items that are purchased by customer CS and an item that customer CS gazes at before purchasing the combination of the items. The gaze table 31b(1) is data for a case where a period of time during which customer CS gazes at a menu that presents items when the customer CS selects items (which will also be referred to as a gazing time) is equal to or shorter than a prescribed time. The gaze table 31b(2) is data for a case when a gazing time of customer CS is longer than the prescribed time. The prescribed time is for example two seconds, and may be set to an appropriate value. The gaze tables 31b will be explained in FIG. 7A and FIG. 7B. Note that the storage device 30b may define a plurality of types of prescribed times stepwisely so as to store a plurality (equal to or greater than three) of gaze tables 31b that are categorized by the respective prescribed times.

The detection device 40b is a computer apparatus etc., and includes a detection unit 41a, a determination unit 42b and a calibration unit 43a.

The detection unit 41a, similarly to the detection unit 41 illustrated in FIG. 1, performs a detection process such as a corneal reflection method etc. on each image picked up at a prescribed frame rate by the image pickup device 10 so as to detect the line of sight of customer CS. Also, the detection unit 41a performs for example an image process of extracting edges etc. from a picked-up image so as to detect the direction of the face of customer CS from the distribution of the extracted edges. Then, the detection unit 41a measures, on the basis of the detected direction of the face, the gazing time during which customer CS gazes at the menu 100 exemplified in FIG. 3. Note that the detection unit 41a may use the detected line of sight of customer CS, instead of the direction of the face of the customer CS, for measuring the gazing time.

The determination unit 42b uses the gazing time of customer CS measured by the detection unit 41a, the gaze tables 31b read from the storage device 30b and the purchase information received from the input process device 20 so as to determine an item that the customer CS is believed to have gazed at in selecting items. For example, the determination unit 42b determines whether or not the gazing time of customer CS measured by the detection unit 41a is equal to or shorter than a prescribed time. When the measured gazing time of customer CS is equal to or shorter than a prescribed time, the determination unit 42b selects the gaze table 31b(1), and when the measured gazing time of the customer CS is longer than the prescribed time, the determination unit 42b selects the gaze table 31b(2).

Then, the determination unit 42b reads an item that receives gaze among the combination of items purchased by customer CS and the probability respectively from gaze item area IA and probability area PA of the selected gaze table 31b, the item being represented by the purchase information received from the input process device 20. The determination unit 42b determines whether or not the read probability is equal to or lower than a prescribed value. When the read probability is greater than the prescribed value, the determination unit 42b determines, as a gaze point in the real space, the item read from gaze item area IA of the selected gaze table 31b. When the read probability is equal to or lower than the prescribed value, the determination unit 42b does not perform the process of determining a gaze point in the real space because determining an item that customer CS was gazing upon the purchase is difficult.

Note that the determination unit 42b does not have to perform the determination processes each time customer CS purchases an item. For example, the detection device 40b may hold purchase information and a gazing time for each customer CS obtained from the input process device 20 in a storage unit such as a hard disk device etc. in the detection device 40b or in the storage device 30a. When gaze tracking systems SYS2 performs a process of marketing etc., the determination unit 42b reads purchase information and a gazing time for each customer CS held in the storage device 30b etc. Then, the determination unit 42b selects the gaze table 31b for each customer CS on the basis of the read gazing time, and determines, for each customer CS, an item serving as a gaze point in the real space, on the basis of the selected gaze table 31b and the read purchase information.

Note that the configurations or the operations of gaze tracking systems SYS2 are not limited to the example illustrated in FIG. 6. For example, when the image pickup device 10 has a function of detecting the line of sight of customer CS as a gaze tracking sensor equivalent to the detection unit 41a, the detection unit 41a may be omitted from the detection device 40b. In such a case, the detection device 40b is implemented in a form that the detection device 40b includes a detection unit that is treated as being part of the image pickup device 10.

FIG. 7A and FIG. 7B illustrate examples of the gaze tables 31b illustrated in FIG. 6. Elements having functions the same as or similar to those explained in FIG. 4 are denoted by the same or similar symbols and detailed explanations thereof will be omitted.

FIG. 7A illustrates the gaze table 31b(1) for a case where a period of time during which customer CS gazes at an item is equal to or shorter than a prescribed time. FIG. 7B illustrates the gaze table 31b (2) for a case where a period of time during which customer CS gazes at an item is longer than the prescribed time.

The gaze tables 31b illustrated in FIG. 7A and FIG. 7B are generated for example on the basis of the result of a questionnaire survey etc. conducted on customer CS by a restaurant employee etc., in a similar or the same manner as in the case of the gaze table 31a illustrated in FIG. 4. For example, the gazing times during which customers CS who answered the questionnaires gaze at the menu 100 illustrated in FIG. 3 are measured using by an image picked up by the image pickup device 10 so as to categorize the results of the questionnaires in accordance with the measured times. This is based on a notion that an item that receives gaze during selection of items before the purchase or the probability of an item of receiving gaze changes in accordance with the gazing times during which customers CS gaze at the menu 100. This notion can be applied in a case, among other cases, when customer CS ordered main dish M and side dish S, and a longer gazing time during which the customer CS gazes at the menu 100 tends to make the customer CS gaze also at the image of the side dish S that he or she ordered together with main dish M. Note that the process of calculating the probability for each gazing time may be executed by a different computer and the execution results may be stored in the storage device 30b.

The detection device 40b obtains a combination of items that are purchased or ordered and the probability, for each item, of receiving gaze in accordance with the gazing time, via a manipulation by an employee etc. of the input process device 20 etc. The detection device 40b generates the gaze table 31b containing an obtained combination of items, an item receiving gaze and the probability, each for a case when the time during which customer CS gazes at the menu 100 is equal to or shorter than a prescribed time and for a case when that time is longer than the prescribed time. Then, the detection device 40b stores the generated gaze tables 31b in the storage device 30b. For example, combination area CA, gaze item area IA and probability area PA of the gaze table 31b(1) illustrated in FIG. 7A store settings that are similar to those in the gaze table 31a illustrated in FIG. 4.

Also, combination area CA and gaze item area IA of the gaze table 31b(2) illustrated in FIG. 7B store for example a setting similar to that in the gaze table 31a illustrated in FIG. 4. However, probability area PA in illustrated in FIG. 7B stores a probability calculated on the basis of questionnaire surveys for a case where the gazing times of customers CS are longer than a prescribed time. It is assumed for example that there are two hundred customers who ordered both main dish M and sub dish S. Then, one hundred customers out of them gazed at the menu 100 for two or more seconds, and seventy customers out of those hundred stated in the answer that they had gazed at main dish M. In such a case, probability area PA in the gaze table 31b (2) stores, as the probability of main dish M receiving gaze, a value, such as 70 percent, smaller than the probability in the gaze table 31b(1).

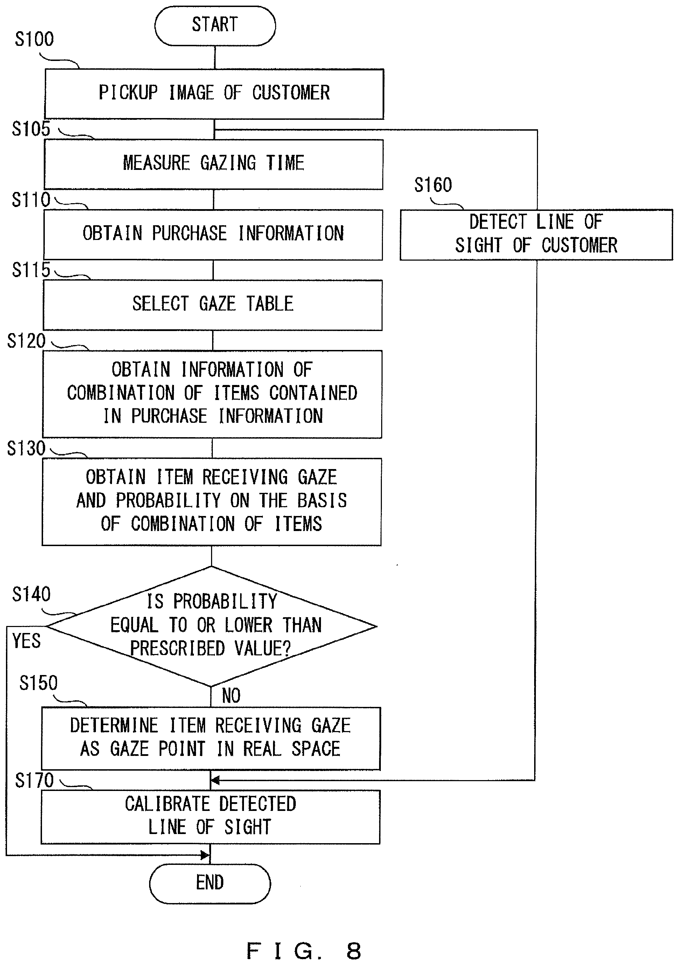

FIG. 8 illustrates an example of a gaze tracking process in gaze tracking systems SYS2 illustrated in FIG. 6. Note that the processes in the steps in FIG. 8 that are the same as or similar to those explained in FIG. 5 are denoted by the same step numbers and detailed explanations thereof will be omitted. The operations in step S105, step S110 and step S115 through step S170 illustrated in FIG. 8 are implemented by a control unit such as a processor etc. included in the detection device 40b executing a gaze tracking program. In other words, FIG. 7A and FIG. 7B illustrate yet another embodiment of a gaze tracking method. Note that the process illustrated in FIG. 8 maybe implemented by hardware included in detection device 40b. In such a case, the detection unit 41a, the determination unit 42b and the calibration unit 43a illustrated in FIG. 6 are implemented by a circuit arranged in the detection device 40b. The detection device 40b performs the processes in step S105 and step S160 after execution of the process in step S100 by the image pickup device 10.

In step S105, the detection unit 41a executes an image process of extracting edges etc. from an image picked up by the menu 100 so as to detect the direction of the face of customer CS from the distribution of the extracted edges, and measures the gazing time during which customer CS gazes at the menu 100 on the basis of the detected direction of the face.

After execution of the process in step S105, the detection device 40b executes the processes in step S110 and step S115. Either of the processes in step S110 and step S115 may be performed ahead of the other.

In step S115, the determination unit 42b selects the gaze table 31b in accordance with the gazing time of customer CS measured in step S105. When for example the measured gazing time of customer CS is equal to or shorter than a prescribed time, the determination unit 42b selects gaze table 31b(1), and when the measured gazing time of customer CS is longer than the prescribed time, the determination unit 42b selects the gaze table 31b(2).

After execution of the process in step S115, the detection device 40b executes the processes in step S120 through step S150 and in step S170. Also, detection device 40b executes the process in step S160 in parallel with or sequentially to the execution of the processes in step S105 through step S150. Note that when the measurement of a gazing time is performed on the basis of a line of sight instead of the face direction in step S105, the process in step S105 is executed after execution of the process in step S160.

When the determination is YES in step S140 or when the process is terminated in step S170, gaze tracking systems SYS2 terminates the gaze tracking process. Note that gaze tracking system SYS2 may repeatedly perform a detection process each time a new customer CS visits the place of business.

After execution of the gaze tracking process in FIG. 8, the calibration unit 43a, by a method similar to the gaze tracking system in FIG. 2, uses correction data of a line of sight obtained by calibrating a line of sight in step S170 and thereby can calibrate the line of sight of customer CS detected from each image by the detection unit 41a.

In the embodiment illustrated in FIG. 6 through FIG. 8, the gaze table 31b is stored in the storage device 30b in advance. Thereby, by using purchase information and the gaze table 31b, the detection device 40b can determine an item that customer CS is believed to have been gazing at in selecting items before purchasing them. Then, the detection device 40b calibrates the line of sight of customer CS in such a manner that the gaze point in the real space of customer CS is associated with the position of the determined item when the detected line of sight of customer CS indicates a spot around the determined item. Thereby, gaze tracking systems SYS2 can calibrate the line of sight of customer CS without obtaining the correction data of each customer CS in advance, and can improve the detection accuracy of the line of sight of customer CS. This makes it possible to identify, more precisely than in the conventional techniques, an item that customer CS was gazing at in selecting items. It is made possible to determine whether or not items that customer CS did not purchase received gaze from the customer CS, allowing processes of marketing to be performed with higher accuracy than in the conventional techniques.

Also, the storage device 30b stores the gaze table 31b in accordance with the gazing time of customer CS and the detection device 40b measures the gazing time of customer CS so as to select the gaze table 31b in accordance with the measured gazing time. This makes it possible for gaze tracking system SYS2 to select the gaze table 31b in accordance with the behavior of customer CS during the purchase, and thereby can detect the line of sight of the customer CS more accurately than in a case where one gaze table 31a is used.

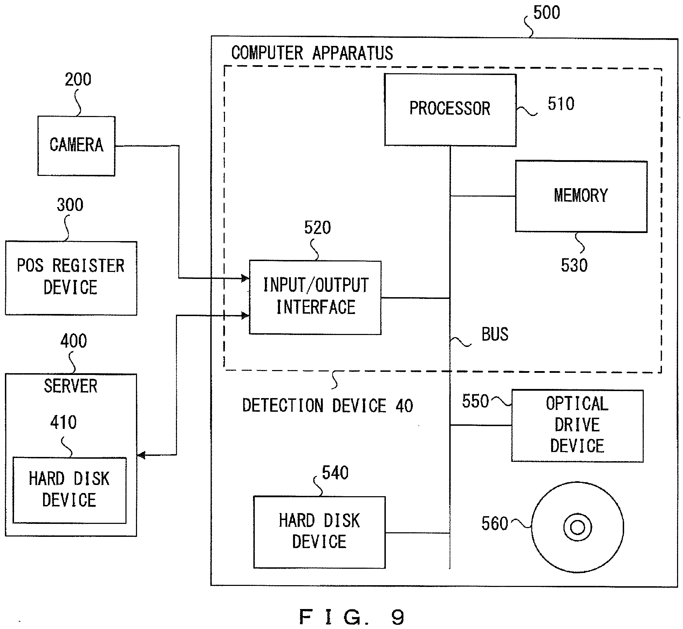

FIG. 9 illustrates an example of a hardware configuration of the gaze tracking systems SYS (SYS1 and SYS2) illustrated in FIG. 1, FIG. 2 and FIG. 6. Elements having functions the same as or similar to those explained in FIG. 2 and FIG. 6 are denoted by the same or similar symbols and detailed explanations thereof will be omitted.

Gaze tracking system SYS illustrated in FIG. 9 includes a camera 200, a POS register device 300, a server 400 and a computer apparatus 500. Each of the camera 200, the POS register device 300 and the server 400 is connected to the computer apparatus 500 wiredly or wirelessly. Note that the computer apparatus 500 may be connected to the camera 200, the POS register device 300 and the server 400 via a network.

The camera 200 picks up an image of customer CS etc. selecting items, and outputs the obtained image to the computer apparatus 500. Note that a place of business may be provided with a plurality of the cameras 200.

Through a manipulation by an employee etc. of the place of business, the POS register device 300 obtains purchase information representing an item purchased by the customer CS. Then, the POS register device 300 outputs the obtained purchase information to the computer apparatus 500.

The server 400 is a computer apparatus etc. that includes a hard disk device 410. The server 400 stores the association information 31 illustrated in FIG. 1 in the hard disk device 410. Alternatively, the server 400 makes the hard disk device 410 store the gaze table 31a illustrated in FIG. 2 or the gaze table 31b illustrated in FIG. 6.

The computer apparatus 500 includes a processor 510, an input/output interface 520, a memory 530, a hard disk device 540 and an optical drive device 550. The processor 510, the input/output interface 520, the memory 530, the hard disk device 540 and the optical drive device 550 are connected to each other via a bus.

The optical drive device 550 can have a removable disk 560 such as an optical disk etc. put into it, and reads information recorded in the removable disk 560 and also writes information to it. The memory 530, the hard disk device 540 and the removable disk 560 are a non-transitory computer-readable recording medium.

Through the input/output interface 520, the processor 510 receives an image of customer CS etc. picked up by the camera 200. Also, the processor 510 receives purchase information of customer CS from the POS register device 300 through the input/output interface 520 and reads the association information 31 (or the gaze tables 31a and 31b) stored in the server 400.

The memory 530 stores an application program for the processor 510 to execute the gaze tracking process, together with the operating system of the computer apparatus 500.

Note that an application program for executing the gaze tracking process can be distributed in a form for example that the program is recorded in the removable disk 560 such as an optical disk etc. Note that an application program for executing the gaze tracking process may be distributed in a form that the program is recorded in a portable storage medium such as a universal serial bus (USB) memory etc.

With the removable disk 560 put into the optical drive device 550 so that a reading process is performed, an application program for executing the gaze tracking process may be stored in the memory 530 or the hard disk device 540. Also, through a network interface included in the computer apparatus 500, the computer apparatus 500 may download an application for executing the detection process via a network so as to store the program in the memory 530 or the hard disk device 540.

Also, the processor 510 executes an application program for the gaze tracking process stored in the memory 530, and thereby functions as the detection unit 41, the determination unit 42 and the calibration unit 43 illustrated in FIG. 1. Also, the processor 510 executes an application program for the gaze tracking process stored in the memory 530, and thereby functions as the detection unit 41, the determination unit 42a and the calibration unit 43a illustrated in FIG. 2. Also, the processor 510 executes an application program for the detection process stored in the memory 530, and thereby functions as the detection unit 41a, the determination unit 42b and the calibration unit 43a illustrated in FIG. 6.

In other words, the detection devices 40 (40a and 40b) are implemented by cooperation between the processor 510, the input/output interface 520 and the memory 530.

**Claims**

1.  A gaze tracking system (SYS, SYS1, SYS2) comprising:

    a storage device (30, 30a, 30b) configured to store association information (31, 31a, 31b(1), 31b(2)), which represents a relationship between a combination of items that are purchased by a customer and an item that the customer gazes at before purchasing the combination of items; and
    a detection device (40, 40a),

    wherein the detection device includes:

    a detection unit (41, 41a) configured to use an image picked up by an image pickup device for picking up an image of a customer so as to detect a line-of-sight position of a customer in an area in which information of a plurality of items is presented;
    a determination unit (42, 42a, 42b) configured to determine one item from among items that are purchased by a first customer on the basis of purchase information of the first customer, which represents an item that is purchased by a customer, and the association information stored in the storage device; and
    a calibration unit (43, 43a) configured to calibrate the detected line-of-sight position of the first customer in the area on the basis of a position in the area at which information of the determined one item is presented.

2.  The gaze tracking system according to claim 1, wherein
    the storage device is configured to store a plurality of pieces of the association information (31b(1), 31b(2)) in accordance with time lengths during which a customer gazes at items purchased by the customer,
    the detection unit (41a) is configured to use the image so as to detect a time length during which a customer gazes at an item, and
    the determination unit (42b) is configured to select one of the plurality of pieces of association information on the basis of the time length, and determines the one item on the basis of the purchase information and the selected association information.

3.  The gaze tracking system according to claim 1 or 2, wherein
    the detection unit is configured to use each image picked up by the image pickup device so as to detect a line-of-sight position of a customer, and
    the calibration unit is configured to use correction data of a line-of-sight position obtained by calibrating the line-of-sight position so as to calibrate the line-of-sight position detected by using each image.

4.  A gaze tracking program for causing a computer to execute a process comprising:

    obtaining (S110) purchase information, which represents an item purchased by one customer;
    detecting (S160) a line-of-sight position before the one customer purchases the item, by using an image picked up by an image pickup device;
    referring (S130), on the basis of the purchase information, to association information (31, 31a, 31b(1), 31b(2)), which represents a relationship between a combination of items that are purchased by a customer and an item that the customer gazes at before purchasing the combination of items so as to determine (S150) one item that the one customer gazed at; and
    calibrating (S170) the line-of-sight position detected for the one customer on the basis of the position of the determined one item.

5. The gaze tracking program according to claim 4, wherein
the detecting the line-of-sight position of the one customer uses the image so as to detect a time length during which a customer gazes at an item, and
the determining the one item selects (S115) one of a plurality of pieces of the association information (31b(1), 31b(2)) in accordance with time lengths during which a customer gazes at items purchased by the customer on the basis of the detected time length and determines the one item on the basis of the selected association information and the purchase information.

6. The gaze tracking program according to claim 4 or 5, wherein
the process further comprises

using each image picked up by the image pickup device so as to detect a line-of-sight position of a customer, and
using correction data of a line-of-sight position obtained by calibrating the line-of-sight position so as to calibrate the line-of-sight position detected by using each image.

7. A gaze tracking method comprising:

obtaining (S110) purchase information, which represents an item purchased by one customer;
detecting (S160) a line-of-sight position before the one customer purchases the item, by using an image picked up by an image pickup device;
referring (S130), on the basis of the purchase information, to association information (31, 31a, 31b(1), 31b(2)), which represents a relationship between a combination of items that are purchased by a customer and an item that the customer gazes at before purchasing the combination of items so as to determine (S150) one item that the one customer gazed at; and
calibrating (S170) the line-of-sight position detected for the one customer on the basis of the position of the determined one item.

8. The gaze tracking method according to claim 7, wherein
the detecting the line-of-sight position of the one customer uses the image so as to detect a time length during which a customer gazes at an item, and
the determining the one item selects (S115) one of a plurality of pieces of the association information (31b(1), 31b(2)) in accordance with time lengths during which a customer gazes at items purchased by the customer on the basis of the detected time length and determines the one item on the basis of the selected association information and the purchase information.

9. The gaze tracking method according to claim 7 or 8, further comprising
using each image picked up by the image pickup device so as to detect a line-of-sight position of a customer, and
using correction data of a line-of-sight position obtained by calibrating the line-of-sight position so as to calibrate the line-of-sight position detected by using each image.

SYS

40

DETECTION DEVICE

CS

10

IMAGE
PICKUP
DEVICE

41

DETECTION UNIT

30

STORAGE DEVICE

42

DETERMINATION
UNIT

ASSOCIATION
INFORMATION

31

INPUT
PROCESS
DEVICE

20

CALIBRATION
UNIT

43

F I G.  1

SYS1

40a

DETECTION DEVICE

10

IMAGE
PICKUP
DEVICE

CS

41

DETECTION UNIT

42a

DETERMINATION
UNIT

20

INPUT
PROCESS
DEVICE

43a

CALIBRATION
UNIT

30a

STORAGE DEVICE

31a

GAZE TABLE

32

ITEM
INFORMATION

F I G. 2

100

M1

MAIN DISH

S1

SIDE DISH

S2

SIDE DISH

M2

MAIN DISH

M3

MAIN DISH

S3

SIDE DISH

AR1

AR2

F I G.  3

31a

| COMBINATION OF ITEMS THAT ARE PURCHASED | ITEM RECEIVING GAZE | PROBABILITY (%) |
|---|---|---|
| MAIN DISH AND SIDE DISH | MAIN DISH | 90 |
| TWO MAIN DISHES | ONE OF MAIN DISHES | 30 |
| ⋮ | ⋮ | ⋮ |

COMBINATION AREA CA    GAZE ITEM AREA IA    PROBABILITY AREA PA

F I G. 4

START

S100

PICKUP IMAGE OF CUSTOMER

S110

OBTAIN PURCHASE INFORMATION

S120

OBTAIN INFORMATION OF
COMBINATION OF ITEMS CONTAINED
IN PURCHASE INFORMATION

S160

DETECT LINE OF SIGHT
OF CUSTOMER

S130

OBTAIN ITEM RECEIVING GAZE
AND PROBABILITY ON THE BASIS
OF COMBINATION OF ITEMS

S140

IS PROBABILITY
EQUAL TO OR LOWER THAN
PRESCRIBED VALUE?

YES

NO

S150

DETERMINE ITEM RECEIVING GAZE
AS GAZE POINT IN REAL SPACE

S170

CALIBRATE DETECTED LINE
OF SIGHT

END

F I G.  5

19

SYS2

DETECTION DEVICE 40b

IMAGE PICKUP DEVICE 10

DETECTION UNIT 41a

DETERMINATION UNIT 42b

INPUT PROCESS DEVICE 20

CALIBRATION UNIT 43a

STORAGE DEVICE 30b

GAZE TABLE 31b(1)

GAZE TABLE 31b(2)

ITEM INFORMATION 32

CS

F I G. 6

31b(1)

| COMBINATION OF ITEMS THAT ARE PURCHASED | ITEM RECEIVING GAZE | PROBABILITY (%) |
|---|---|---|
| MAIN DISH AND SIDE DISH | MAIN DISH | 90 |
| TWO MAIN DISHES | ONE OF MAIN DISHES | 30 |
| ⋮ | ⋮ | ⋮ |

COMBINATION AREA CA     GAZE ITEM AREA IA     PROBABILITY AREA PA

F I G. 7 A

31b(2)

| COMBINATION OF ITEMS THAT ARE PURCHASED | ITEM RECEIVING GAZE | PROBABILITY (%) |
|---|---|---|
| MAIN DISH AND SIDE DISH | MAIN DISH | 70 |
| TWO MAIN DISHES | ONE OF MAIN DISHES | 25 |
| ⋮ | ⋮ | ⋮ |

COMBINATION AREA CA     GAZE ITEM AREA IA     PROBABILITY AREA PA

F I G. 7 B

START

S100

PICKUP IMAGE OF CUSTOMER

S105

MEASURE GAZING TIME

S110

OBTAIN PURCHASE INFORMATION

S160

DETECT LINE OF
SIGHT OF CUSTOMER

S115

SELECT GAZE TABLE

S120

OBTAIN INFORMATION OF
COMBINATION OF ITEMS CONTAINED
IN PURCHASE INFORMATION

S130

OBTAIN ITEM RECEIVING GAZE
AND PROBABILITY ON THE BASIS
OF COMBINATION OF ITEMS

S140

IS PROBABILITY
EQUAL TO OR LOWER THAN
PRESCRIBED VALUE?

YES

NO

S150

DETERMINE ITEM RECEIVING GAZE
AS GAZE POINT IN REAL SPACE

S170

CALIBRATE DETECTED
LINE OF SIGHT

END

F I G. 8

500

COMPUTER APPARATUS

PROCESSOR ⌇ 510

MEMORY

530

200

CAMERA

300

POS REGISTER DEVICE

520

INPUT/OUTPUT INTERFACE

BUS

400

SERVER

410

HARD DISK DEVICE

DETECTION DEVICE 40

550⌇ OPTICAL DRIVE DEVICE

540

HARD DISK DEVICE

560⌇

F I G. 9

Europäisches
Patentamt

European
Patent Office

Office européen
des brevets

## EUROPEAN SEARCH REPORT

Application Number

EP 16 19 9512

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2013/059940 A1 (TANDEMLAUNCH TECHNOLOGIES INC [CA]) 2 May 2013 (2013-05-02) * abstract * * paragraph [0002] - paragraph [0010] * * paragraph [0036] - paragraph [0084] * * claims 1-22 * * figures 1-7,11-12,16-19,22 * ----- | 1-9 | INV. G06Q30/06 |
| X | TAKEHIKO OHNO ET AL: "FreeGaze", PROCEEDINGS ETRA 2002 EYE TRACKING RESEARCH & APPLICATIONS SYMPOSIUM. NEW ORLEANS, LA, MARCH 25 - 27, 2002, NEW YORK, NY : ACM, US, 25 March 2002 (2002-03-25), pages 125-132, XP058122095, DOI: 10.1145/507072.507098 ISBN: 978-1-58113-467-4 * the whole document * ----- | 1-9 | |

TECHNICAL FIELDS
SEARCHED       (IPC)

G06Q
A61B
G06F

The present search report has been drawn up for all claims

| Place of search | Date of completion of the search | Examiner |
|---|---|---|
| The Hague | 18 January 2017 | Bassanini, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 9512

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2017

| Patent document cited in search report | Publication date | Patent family member(s) | Publication date |
|---|---|---|---|
| WO 2013059940 A1 | 02-05-2013 | CA 2853709 A1<br>US 2014320397 A1<br>WO 2013059940 A1 | 02-05-2013<br>30-10-2014<br>02-05-2013 |

EPO FORM P0459

For more details about this annex : see Official Journal of the European Patent Office, No. 12/82

## REFERENCES CITED IN THE DESCRIPTION

**Patent documents cited in the description**

- JP 2009151409 A

- JP 2010204882 A

**Non-patent literature cited in the description**

- **OHNO et al.** Just Look at Two Points: A Gaze Tracking System with Easy Calibration. *Information Processing Society of Japan,* 2003, vol. 44 (4), 1136-1149

- **OHNO et al.** FreeGaze: A Gaze Tracking System for Everyday Gaze Interaction. *ETRA 2002,* 2002, 125-132